# EUROPÄISCHE PATENTANMELDUNG

(11) **EP 3 981 494 A1**
(43) Veröffentlichungstag der Anmeldung: **13.04.2022**
(21) Anmeldenummer: 21210689.2
(22) Anmeldetag: 17.10.2017
(51) Int. Cl.: B01D 46/24

(54) **RUNDFILTERELEMENT, INSBESONDERE ZUR GASFILTRATION**

(30) Priorität: 17.10.2016 DE 102016012331
(62) Teilanmeldung aus: 17793591.3
(71) Anmelder: MANN+HUMMEL GmbH, 71636 Ludwigsburg (DE)
(72) Erfinder: Neef, Pascal, 78647 Trossingen (DE); Donauer, Nadine, 70736 Fellbach (DE); Hettkamp, Philipp, 71711 Steinheim (DE); Fritzsching, Torsten, 71665 Vaihingen (DE); Pereira Madeira, Pedro Miguel, 74321 Bietigheim-Bissingen (DE)
(74) Vertreter: Mann + Hummel Intellectual Property

(57) **Zusammenfassung**

Ein Rundfilterelement weist einen Filtermediumkörper auf, dessen Wandung von dem zu reinigenden Fluid in Radialrichtung durchströmbar ist, wobei an oder benachbart zu einer Stirnseite ein umlaufender Dichtungsträger angeordnet ist, der Träger eines Positionierungselementes zur formschlüssigen Verbindung mit einem zugeordneten, gehäuseseitigen Gegenpositionierungselement ist.

## Beschreibung

### Technisches Gebiet

Die Erfindung bezieht sich auf ein Rundfilterelement, insbesondere zur Gasfiltration, nach dem Oberbegriff des Anspruches 1.

### Stand der Technik

In der US 2013/0232934 A1 wird ein Rundfilterelement beschrieben, das in einem Luftfilter beispielsweise im Ansaugtrakt einer Brennkraftmaschine eingesetzt werden kann. Das Filterelement ist mit einem hohlzylindrischen Filtermediumkörper versehen, an dessen Außenseite ein Stützgitter zur Abstützung des Filtermediumkörpers angeordnet ist. In die außen liegende Mantelfläche des Filtermediumkörpers ist ein V-förmiger Einschnitt eingebracht, in den ein stabförmiges Positionierungselement eingesetzt ist, welches im eingebauten Zustand im aufnehmenden Filtergehäuse ein unbeabsichtigtes Rotieren um die Filterelementlängsachse verhindert. Die Wandungen im Bereich des V-förmigen Einschnittes des Filtermediumkörpers sind strömungsdicht versiegelt. Zur Abdichtung der Roh- gegenüber der Reinseite des Filterelementes befindet sich im Bereich einer stirnseitigen Endscheibe am Filtermediumkörper ein umlaufendes Dichtungselement.

### Offenbarung der Erfindung

Der Erfindung liegt die Aufgabe zugrunde, mit einfachen konstruktiven Maßnahmen ein Rundfilterelement in der Weise auszubilden, dass im eingebauten Zustand das Rundfilterelement im Filtergehäuse sicher aufgenommen ist.

Diese Aufgabe wird erfindungsgemäß mit den Merkmalen des Anspruches 1 gelöst. Die Unteransprüche geben zweckmäßige Weiterbildungen an.

Das erfindungsgemäße Rundfilterelement wird bevorzugt zur Gasfiltration eingesetzt, beispielsweise zur Filtration von Luft, insbesondere im Ansaugtrakt einer Brennkraftmaschine eines Fahrzeugs. Das Filterelement weist einen Filtermediumkörper auf, dessen Wandung von dem zu reinigenden Fluid durchströmt wird. Der Filtermediumkörper umschließt einen innen liegenden Strömungsraum, der von der Innenwand des Filtermediumkörpers begrenzt wird. Bezogen auf seine Längsachse wird der Filtermediumkörper in Radialrichtung durchströmt, vorzugsweise radial von innen nach außen, so dass der innen liegende Strömungsraum an die Rohseite des Filtermediumkörpers angrenzt und die Außenseite des Filtermediumkörpers die Reinseite bildet, über die das gereinigte Fluid austritt. Mindestens an einer axialen Stirnseite, vorzugsweise an beiden gegenüberliegenden axialen Stirnseiten ist der Filtermediumkörper von Endscheiben strömungsdicht abgedeckt.

In einer bevorzugten Ausführungsform weist eine Endscheibe eine mit dem innen liegenden Strömungsraum kommunizierende, zentrale Öffnung für die axiale Strömungsführung des Fluids auf, die gegenüberliegende Endscheibe ist dagegen geschlossen ausgebildet und schließt den innen liegenden Strömungsraum axial nach außen dicht ab.

Zweckmäßigerweise ist die mit der zentralen Öffnung versehene Endscheibe am Filterelement an ihrer radialen Innenseite abgerundet ausgebildet, wodurch das Hineinströmen der Rohluft in den Innenraum des Filtermediumkörpers erleichtert wird. Dies ist bei der Einströmung in den Innenraum des Filterelements zur Minimierung des Gesamtdruckverlustes von besonderer Bedeutung, wenn wie vorliegend bevorzugt die Luft frei in den Innenraum einströmt und wie weiter vorliegend bevorzugt kein den Luftstrom direkt in den Innenraum führendes Strömungsrohr vorgesehen ist. Der Radius der Rundung ist an der radialen Innenseite der Endscheibe vorteilhafterweise größer als an der radialen Außenseite. Der Radius an der radialen Innenseite ist gegebenenfalls so groß ausgeführt, dass der Beginn des Radius an der Stirnseite noch innerhalb der Kontur des Filtermediumkörpers liegt. Der Radius der Rundung an der radialen Innenseite der Endscheibe liegt beispielsweise in einem Bereich zwischen 5 mm und 15 mm, zum Beispiel bei 7,5 mm.

Das Rundfilterelement mit dem Filtermediumkörper kann hohlzylindrisch oder nicht-rotationssymmetrisch ausgebildet sein, beispielsweise eine ovale oder ovalisierte Querschnittsform besitzen, wobei auch Querschnittsformen mit parallelen Längsseiten und halbkreisförmigen Schmalseiten in Betracht kommen und die Längsseiten geringfügig konvex oder konkav außen bzw. nach innen gekrümmt sein können. In bevorzugter Ausführung verlaufen die Innenwand und die Außenwand des Filtermediumkörpers konzentrisch zueinander, so dass der Filtermediumkörper eine konstante radiale Dicke aufweist, wenngleich auch Ausführungen möglich sind, bei denen der Filtermediumkörper entlang seines Umfanges eine sich ändernde radiale Dicke aufweist.

Gemäß einer weiteren zweckmäßigen Ausführung weist das Rundfilterelement eine sich in Achsrichtung verjüngende Querschnittsform auf, so dass der Außenumfang des Rundfilterelements im Bereich der ersten Endscheibe unterschiedlich groß ist im Vergleich zum Außenumfang des Rundfilterelements im Bereich der gegenüberliegenden, zweiten Endscheibe. Auch in dieser Ausführung kommen runde Querschnittsformen im Bereich beider Endscheiben in Betracht, so dass das Rundfilterelement und der Filtermediumkörper konusförmig ausgebildet sind. Des Weiteren ist es auch möglich, im Bereich beider Endscheiben jeweils eine ovale oder ovalisierte Querschnittsform vorzusehen.

Bei einer sich verjüngenden Querschnittsform des Rundfilterelements kann die Endscheibe an der Stirnseite mit kleinerem Außenumfang geschlossen ausgebildet sein und den innen liegenden Strömungsraum axial verschließen, wohingegen die gegenüberliegende Endscheibe am größeren Außenumfang eine Strömungsöffnung für das Einleiten von Fluid in den innen liegenden Strömungsraum aufweist.

Des Weiteren sind auch Ausführungen möglich, bei denen die Endscheibe an der Stirnseite mit größerem Außenumfang geschlossen ausgebildet ist und den innen liegenden Strömungsraum axial verschließt und die gegenüberliegende Endscheibe am kleineren Außenumfang eine Strömungsöffnung für das Einleiten von Fluid in den innen liegenden Strömungsraum aufweist.

Das erfindungsgemäße Rundfilterelement weist an der Außenwand des Filtermediumkörpers ein Stützgitter auf, das insbesondere formstabil ausgebildet ist. Das Stützgitter ist beispielsweise als thermoplastisches Spritzgussteil ausgebildet. Aufgrund der Durchströmung des Filtermediumkörpers radial von innen nach außen unterliegt die Wandung des Filtermediumkörpers einem radial nach außen gerichteten Druck, unter dem die Wandung bestrebt ist, sich nach außen zu wölben. Das Stützgitter an der Außenwand des Filtermediumkörpers verhindert eine Verformung der Wandung radial nach außen und hält somit während der Filtration den Filtermediumkörper in Form, so dass eine Verformung vermieden wird. Dementsprechend behält der Filtermediumkörper über einen langen Betriebszeitraum seine ursprüngliche geometrische Gestalt bei und bleiben die Strömungsverhältnisse bei der Filtration des Fluids erhalten. Außerdem erfährt der Filtermediumkörper an der Außenseite eine Abstützung durch das Stützgitter, so dass der Filtermediumkörper geringeren Belastungen unterworfen und die Gefahr einer Schädigung des Filtermediumkörpers herabgesetzt ist. Vorteilhafterweise ist mindestens eine Stirnseite des Stützgitters, gegebenenfalls beide Stirnseiten in die Endscheiben eingebettet. Mindestens eine Endscheibe besteht bevorzugt aus einem weicheren Material als das Stützgitter und ein Dichtungsträger am Filterelement, der ein Dichtungselement aufnimmt. Bevorzugt ist die Endscheibe oder sind die Endscheiben hergestellt aus einer gießbaren Masse wie beispielsweise und bevorzugt Polyurethan (PUR), insbesondere Polyurethanschaum.

Der Filtermediumkörper ist bevorzugt als Faltenfilter mit einer Vielzahl von Filterfalten ausgebildet. Die Filterfalten verlaufen bevorzugt in oder annähernd in Radialrichtung und damit in Durchströmungsrichtung und erstrecken sich zugleich axial zwischen den beiden Stirnseiten des Filtermediumkörpers. Der Faltenfilter ist ringförmig geschlossen ausgebildet.

Es ist insbesondere genau ein als Rundfilter ausgebildeter Filtermediumkörper im Filterelement angeordnet bzw. vom Filterelement umfasst.

Gemäß einer weiteren vorteilhaften Ausführung ragt in eine Stirnseite des Filtermediumkörpers ein Formkörper hinein, der den Filtermediumkörper zusätzlich stabilisiert und in der Ausführung als Faltenfilter die Filterfalten in der gewünschten Position hält. In der Ausführung mit einer sich verjüngenden Querschnittsfläche befindet sich der Formkörper bevorzugt an der Stirnseite mit reduzierter Querschnittsfläche. Der Formkörper kann einteilig mit dem Stützgitter am Filtermediumkörper ausgebildet sein, so dass Stützkräfte, die auf die Stirnseite des Filterelements mit dem Formkörper wirken, über den Formkörper auf das Stützgitter geleitet werden und die Endscheibe von den Stützkräften entlastet wird.

Die Außenkontur des Formkörpers entspricht vorteilhafterweise der Außenkontur und/oder der Innenkontur des Filtermediumkörpers an deren Stirnseite, in die der Formkörper in den Filtermediumkörper hineinragt. Es kann zweckmäßig sein, den Formkörper zumindest abschnittsweise mit der benachbarten Endscheibe zu verbinden, beispielsweise am Formkörper einen Dom auszubilden, der in die Endscheibe hineinragt. Die Endscheibe, in die ein oder mehrere Abschnitte des Formkörpers hineinragen, ist vorzugsweise geschlossen ausgebildet und dichtet den Innenraum im Filtermediumkörper strömungsdicht ab. Der Formkörper kann sich gegebenenfalls zu seiner freien Stirnseite innerhalb des vom Filtermediumkörper umschlossenen Raums hin insbesondere keilförmig verjüngen, wodurch der Herstellungsprozess des Filterelements vereinfacht und unterstützt wird. Der Formkörper ist insbesondere als längsgestreckter Körper ausgebildet und erstreckt sich entlang der Langseiten des Filterelements zwischen gegenüberliegenden Seiten, insbesondere den Kurzseiten mit starker Krümmung, des Stützgitters. Bei der Herstellung des Filterelements wird der Filtermedienkörper mittels des Formkörpers beim Aufschieben des Filtermediumkörpers auf den Formkörper gleichzeitig zentriert und in die Form gebracht, welche der Filtermediumkörper in Endlage einnehmen soll.

Gemäß einer vorteilhaften Ausführung weist das Rundfilterelement ein Dichtungselement auf, insbesondere einen umlaufenden Dichtungsring, das an einem insbesondere separat von der Endscheibe ausgebildeten Dichtungsträger und benachbart zur rohluftseitigen und/oder offenen Endscheibe, über die das ungereinigte Fluid in den innen liegenden Strömungsraum einleitbar ist, angeordnet ist. Das Dichtungselement liegt hierbei axial und radial auf Abstand zu der benachbarten, nächstgelegenen Endscheibe. Es ist insbesondere in Richtung der Längsachse des Filterelements gesehen zwischen den beiden Stirnseiten des Filtermediumkörpers und zwischen den beiden Endscheiben angeordnet und von diesen beabstandet. Anders gesagt spannt das Dichtungselement eine Dichtebene auf, welche zwischen und bevorzugt parallel zu den Stirnseiten des Filtermediumkörpers bzw. den Endscheiben liegt. Über das Dichtungselement erfolgt eine strömungsdichte Separierung der Roh- von der Reinseite. Aufgrund der separaten Ausführung des Dichtungsträgers von der Endscheibe ist die Endscheibe nicht den Halte- und Dichtkräften unterworfen, die über das Dichtungselement und den Dichtungsträger in Einbausituation des Rundfilterelementes aufgenommen werden. Die Endscheibe bleibt somit unbeeinflusst von den Halte- und Dichtkräften. Aufgrund des Abstandes des Dichtungselementes und vorteilhafterweise auch des Dichtungsträgers axial und radial zur benachbarten Endscheibe weisen Dichtungsträger und Dichtungselement auch einen Abstand zur Rein- bzw. Außenseite des Filtermediumkörpers auf, so dass das Fluid ungehindert vom Dichtungsträger und vom Dichtungselement über die Reinseite des Filtermediumkörpers austreten kann. Der Dichtungsträger ist fluiddicht ausgebildet und verbindet vorteilhafterweise die nächstgelegene Endscheibe fluiddicht mit dem Dichtungselement, d. h. bevorzugt die dem Dichtungsträger benachbarte, rohluftseitige und/oder offene Endscheibe.

Der Dichtungsträger ist zur Stirnseite der benachbarten, nächstgelegenen Endscheibe axial beabstandet. Der axiale Abstand beträgt beispielsweise, bezogen auf die gesamte axiale Höhe des Filterelements, maximal 30 % der axialen Höhe, bevorzugt maximal 20 % der axialen Höhe oder maximal 10 % der axialen Höhe.

Gemäß einer bevorzugten Ausführung ist der Dichtungsträger an dem Stützgitter angeordnet. Es kommt insbesondere eine einteilige Ausführung von Stützgitter und Dichtungsträger in Betracht, die vorzugsweise als Kunststoffbauteile ausgebildet sind. Die Dicht-und Halte- sowie Stützkräfte werden entsprechend über den Dichtungsträger und das Stützgitter aufgenommen, wohingegen der Filtermediumkörper von diesen Kräften entlastet ist.

Gemäß einer weiteren vorteilhaften Ausführung ist der Dichtungsträger als eine umlaufende Trägerwand ausgebildet oder umfasst eine umlaufende Trägerwand, die auf Abstand zur außen liegenden Mantelfläche des Filtermediumkörpers verläuft. Die Trägerwand verläuft insbesondere parallel zu der außen liegenden Mantelfläche des Filtermediumkörpers. Auf diese Weise kann die Trägerwand bevorzugt einen den Filtermediumkörper über einen Teil dessen Länge umgebenden Rohrabschnitt bilden, an dessen einen Ende oder Stirnseite das Dichtungselement angeordnet ist und an dessen anderen Ende oder Stirnseite die Trägerwand bevorzugt und insbesondere dichtend mit der benachbarten bzw. dem Dichtungselement nächstliegenden Endscheibe verbunden ist. Das Dichtungselement ist vorteilhafterweise in eine Aufnahmenut in der Trägerwand eingesetzt, wobei sich die Aufnahmenut bevorzugt an oder benachbart zu einer Stirnfläche der Trägerwand befindet. Die Position des Dichtungselementes an der Trägerwand befindet sich auf der der nächstliegenden Endscheibe abgewandten Stirnfläche bzw. Stirnseite der Trägerwand.

In einer bevorzugten Ausführungsform ist der Dichtungsträger bzw. die Trägerwand insbesondere an der von dem Dichtungselement abgewandten Stirnseite des Dichtungsträgers bzw. der Trägerwand dichtend und bevorzugt formschlüssig mit der dem Dichtungselement nächstliegenden Endscheibe, d. h. der offenen Endscheibe, verbunden, insbesondere in diese eingebettet oder mit dieser verklebt. In Fällen, in welchen Dichtungsträger und Stützgitter einstückig ausgebildet sind, kann vorteilhaft die Einheit aus Dichtungsträger und Stützgitter so jeweils mit beiden Endscheiben verbunden werden, bevorzugt jeweils durch Einbetten der jeweiligen stirnseitigen Enden in die jeweilige Endscheibe, so dass die stirnseitigen Enden von Dichtungsträger und Stützgitter formschlüssig von den Endscheiben umschlossen sind.

Der Dichtungsträger stützt sich vorteilhafterweise in Einbaulage an einem Gehäusebauteil ab, beispielsweise an einem innenliegenden Absatz in einem Filtergrundgehäuse, das das Filterelement aufnimmt und auf das ein Gehäusedeckel aufsetzbar ist.

An der Stirnfläche, insbesondere an der Oberseite des Dichtungsträgers können gegebenenfalls, vorteilhafterweise mit axialem Abstand zur Stirnfläche, Noppen angeformt sein. Diese Noppen haben die Funktion eines Toleranzausgleiches und können Abweichungen des Dichtungsträgers von einer planen Fläche für das Aufsetzen des Gehäusedeckels und/oder das Aufsetzen auf den Absatz im Filtergrundgehäuse kompensieren. Die Noppen sind beispielsweise stabförmig ausgebildet und liegen parallel zur Seitenwand des Dichtungsträgers; die stabförmigen Noppen verlaufen zum Beispiel in Radialrichtung. In Einbaulage drücken sich die Noppen in das Material des Gehäusebauteils hinein und/oder die Noppen werden insbesondere elastisch oder plastisch und verformt und gleichen hierdurch Toleranzabweichungen aus. Bevorzugt wird für die Noppen ein weicherer Werkstoff gewählt als für das Gehäusebauteil (insbesondere der Gehäusedecke), so dass die Verformung im Wesentlichen oder vollständig bei den Noppen erfolgt.

Gemäß einer weiteren zweckmäßigen Ausführung, die sich vorzugsweise auf ein Rundfilterelement mit einer sich in Achsrichtung verjüngenden Querschnittsform bezieht, weist die kleinere Endscheibe radial überstehende Stütznocken auf. Vorteilhafterweise ragen diese Stütznocken in Radialrichtung nicht weiter hinaus als die gegenüberliegende Endscheibe oder die Innen- oder Außenkontur der gegenüberliegenden Dichtung. Es kann jedoch auch ein leichter Überstand vorgesehen sein, um eine besonders starke Verspannung zu erzielen. Die Innenkontur von Dichtungsträger und/oder Dichtungselement verlaufen vorteilhafterweise in Radialrichtung im Wesentlichen entlang des Außenumfangs der größeren Endscheibe.

Im Fall einer ovalen oder ovalisierten Querschnittsform des Filtermediumkörpers befinden sich die Stütznocken vorzugsweise an den Längsseiten und sind insbesondere an der Endscheibe, vorzugsweise an der kleineren Endscheibe angeordnet, insbesondere einteilig mit der Endscheibe ausgebildet und an dieser angeformt. Es ist aber auch möglich, zusätzlich an der Schmalseite einen oder mehrere Nocken an der Endscheibe anzuordnen. Die Nocken ragen in Radialrichtung über die Endscheibe hinaus und stützen bevorzugt das Rundfilterelement im eingebauten Zustand am aufnehmenden Filtergehäuse ab.

Ein weiterer Aspekt der Erfindung bezieht sich auf eine Filtereinrichtung mit einem vorbeschriebenen Rundfilterelement und mit einem Filtergehäuse zur Aufnahme des Rundfilterelements. Zum Filtergehäuse gehört insbesondere auch ein Gehäusedeckel, der auf ein Filtergrundgehäuse aufsetzbar ist, um den Aufnahmeraum im Filtergrundgehäuse, in welchen das Filterelement eingesetzt ist, zu verschließen. An der Innenseite des Gehäusedeckels ist, gemäß einer weiteren vorteilhaften Ausführung, eine vorzugsweise schwertförmige Strömungsleitrippe angeordnet, welche die Einleitung des Fluidstroms in den innen liegenden Strömungsraum und die gleichmäßige Partikelbelastung des Filterelements bei der Filtration des Fluids unterstützt, insbesondere auch bei nicht-symmetrischen oder nicht-parallelen Strömungsverhältnissen. Das ungereinigte Fluid wird bevorzugt von außen radial in Richtung des Filtermediumkörpers geleitet und trifft dann auf die Strömungsleitrippe an der Innenseite des Gehäusedeckels, die den auftreffenden Fluidstrom beeinflusst, beispielsweise zweiteilt und/oder axial in Richtung des innen liegenden Strömungsraums im Filtermediumkörper leitet.

Es kommen verschiedene Ausführungen der Strömungsleitrippe in Betracht. Die Strömungsleitrippe ist entweder geradlinig und in einer Ebene liegend ausgebildet oder, gemäß einer alternativen Ausführung, gekrümmt ausgeführt. Die Strömungsleitrippe kann sich bei geradliniger Ausführung in Achsrichtung des Filterelementes erstrecken, so dass die Wandseiten der Strömungsleitrippe parallel zur Längsachse des Filterelementes verlaufen.

Die Strömungsleitrippe kann in die Strömungsöffnung hineinragen, die in die Endscheibe des Rundfilterelements eingebracht ist, über die das ungereinigte Fluid in den innen liegenden Strömungsraum im Filtermediumkörper eingeleitet wird.

Gemäß einer weiteren zweckmäßigen Ausführung ist in den Gehäusedeckel eine seitliche, in Radialrichtung weisende Einströmöffnung eingebracht, über die das ungereinigte Fluid radial einströmt. Die Strömungsleitrippe kann benachbart zu dieser Einströmöffnung im Gehäusedeckel angeordnet sein. Die Strömungsleitrippe kann in der Weise positioniert sein, dass die Stirnseite der Strömungsleitrippe der Einströmöffnung im Gehäusedeckel zugewandt ist. Die über den Gehäusedeckel radial herangeführte Fluidströmung trifft auf die Strömungsleitrippe und erfährt eine Ablenkung in Richtung des innen liegenden Strömungsraums im Filtermediumkörper. Die Strömungsleitrippe und die Einströmöffnung können zumindest annähernd parallel ausgerichtet sein.

Vorteilhafterweise ist auch in das Filtergrundgehäuse des Filtergehäuses eine seitliche Einströmöffnung für das heranzuführende Fluid eingebracht, wobei diese Einströmöffnung in dem Filtergrundgehäuse und die seitliche Einströmöffnung im Gehäusedeckel im montierten Zustand übereinander liegen und einen durchgehenden Strömungsweg für das herangeführte Fluid bilden.

Gemäß einer weiteren zweckmäßigen Ausführung ist in das Filtergrundgehäuse eine seitliche, vorzugsweise in Radialrichtung weisende Abströmöffnung eingebracht, über die das gereinigte Fluid abströmt. Es kann zweckmäßig sein, dass die Abströmöffnung zumindest annähernd parallel zur Einströmöffnung sowie zur Strömungsleitrippe ausgerichtet ist.

Gemäß einer weiteren zweckmäßigen Ausführung steht das Filterelement im eingebauten Zustand axial geringfügig über die Stirnseite des Filtergrundgehäuses hinaus, wodurch die Entnahme des Filterelements aus dem Filtergrundgehäuse, beispielsweise zu Wartungszwecken, erleichtert wird. Der Dichtungsträger mit dem Dichtungselement liegt mit kleinem axialen Abstand zur herausragenden Stirnseite des Filterelements und sorgt für die strömungsdichte Separierung zwischen dem außenliegenden Abschnitt des Filterelements und dem innenliegenden, im Filtergrundgehäuse aufgenommenen Abschnitt des Filterelements.

An oder benachbart zu einer Stirnseite ist ein umlaufender Dichtungsträger am Rundfilterelement angeordnet, an dem sich im eingebauten Zustand im Filtergehäuse ein Dichtungselement abstützt, welches benachbart zur radialen Außenseite des Filtermediumkörpers liegt. Das Dichtungselement ist vorteilhafterweise an dem Dichtungsträger des Rundfilterelementes angeordnet, insbesondere in eine Aufnahmenut im Dichtungsträger eingesetzt, wobei auch Ausführungen in Betracht kommen, bei denen sich das Dichtungselement im Filtergehäuse befindet und nur im eingebauten Zustand das Dichtungselement an dem Dichtungsträger des Rundfilterelementes anliegt. Das Dichtungselement separiert im eingebauten Zustand die Roh- von der Reinseite des Filterelements.

Am Filterelement ist ein Positionierungselement angeordnet, mit dem eine formschlüssige Verbindung des Rundfilterelementes mit einem zugeordneten, gehäuseseitigen Gegenpositionierungselement im eingebauten Zustand herstellbar ist. Vorteilhafterweise ist der Dichtungsträger auch Träger des Positionierungselements. Die formschlüssige Verbindung zwischen Positionierungselement am Rundfilterelement und Gegenpositionierungselement am Filtergehäuse bezieht sich auf mindestens eine Relativbewegungsmöglichkeit des Rundfilterelementes gegenüber dem Filtergehäuse und dient beispielsweise als Verdrehsicherung des Rundfilterelementes im Filtergehäuse oder als Positionierhilfe für das Filterelement und/oder ein Gehäuseteil beim Austausch des Rundfilterelementes im Gehäuse im Wartungsfall. Mithilfe des Positionierungselementes und des zugeordneten, gehäuseseitigen Gegenpositionierungselementes wird die Position des Rundfilterelementes im Filtergehäuse eindeutig bestimmt, wodurch das Einsetzen des Filterelements in das Filtergehäuse vereinfacht wird. Erreicht wird dies in einer konstruktiv einfachen Ausführung, indem am Filterelement das Positionierungselement angeordnet ist, insbesondere indem der Dichtungsträger zusätzlich zur Aufnahme der Dichtungskräfte, welche von dem Dichtungselement herrühren, auch Träger des Positionierungselementes ist.

Der Dichtungsträger separiert die Rohseite und die Reinseite am Filterelement strömungsdicht voneinander, so dass ein Strömungskurzschluss des zu reinigenden Fluids unter Umgehung des Filtermediumkörpers ausgeschlossen ist.

Der Dichtungsträger ist vorteilhafterweise ringförmig ausgebildet und liegt in einer Ebene, die orthogonal zur Längsachse des Filterelementes gerichtet ist. Dichtungselement und Positionierungselement können sich beispielsweise an gegenüberliegenden axialen Seitenflächen des Dichtungsträgers befinden.

Der umlaufende Dichtungsträger führt außerdem zu einer höheren Stabilität des Rundfilterelements, insbesondere in Radialrichtung. Der Außenrand des Dichtungsträgers kann sich gegebenenfalls an der Innenwand des aufnehmenden Filtergehäuses abstützen.

Bei ringförmiger Ausführung des Dichtungsträgers befindet sich dieser vorteilhafterweise an der insbesondere radialen Außenseite des Filtermediumkörpers. Auch das Dichtungselement befindet sich an der radialen Außenseite des Filtermediumkörpers. Der Filtermediumkörper wird vorzugsweise radial von innen nach außen oder von außen nach innen von dem zu reinigenden Fluid durchströmt, so dass der Dichtungsträger und das Dichtungselement sich an der Reinseite des Filtermediumkörpers befinden.

Gemäß einer vorteilhaften Ausführung ist das Positionierungselement einteilig mit dem Dichtungsträger ausgebildet. Der Dichtungsträger ist vorzugsweise als Kunststoffbauteil ausgeführt, das insbesondere im Spritzgießverfahren herstellbar ist. Es kommt gegebenenfalls auch eine zweiteilige Ausführung von Positionierungselement und Dichtungsträger in Betracht, wobei in diesem Fall das Positionierungselement vorteilhafterweise fest mit dem Dichtungsträger oder mit einem Stützgitter am Filtermediumkörper verbunden ist.

Gemäß einer weiteren vorteilhaften Ausführung erstreckt sich das Positionierungselement optional in den Filtermediumkörper, insbesondere radial in den Filtermediumkörper hinein. Vorteilhafterweise umgreift der ringförmige Dichtungsträger den Filtermediumkörper und befindet sich das Positionierungselement an der radial innen liegenden Seite des Dichtungsträgers und liegt somit zumindest abschnittsweise innerhalb des Filtermediumkörpers. Diese Ausführung hat den Vorteil, dass für die Anordnung des Positionierungselementes ein zusätzlicher, radial nach außen ragender Bauraum nicht erforderlich ist. Somit wird die maximale radiale Erstreckung des Filterelementes von dem außen liegenden Randbereich des Dichtungsträgers bestimmt.

Gemäß noch einer weiteren zweckmäßigen Ausführung ist das Positionierungselement als ein insbesondere keilförmiger Hohlkörper ausgebildet, in das im montierten Zustand das gehäuseseitige Gegenpositionierungselement hineinragt. Der Hohlkörper nimmt das beispielsweise schwertförmige Gegenpositionierungselement auf, wodurch eine formschlüssige Verbindung zwischen Positionierungs- und Gegenpositionierungselement erreicht wird, wobei der Formschluss gegebenenfalls in alle Radialrichtungen wirksam ist. Bei korrekter Einbaulage des Filterelements im Filtergehäuse besteht vorteilhafterweise kein oder nur ein leichter Kontakt ohne Kraftübertragung zwischen Positionierungs- und Gegenpositionierungselement.

In einer alternativen Ausführung ist das Gegenpositionierungselement als ein Hohlkörper ausgebildet, in den das Positionierungselement hineinragt.

Gemäß einer weiteren vorteilhaften Ausführung, die sich auf das Positionierungselement als Hohlkörper bezieht, ist in den Hohlraum innerhalb des Positionierungselementes ein Boden in Form einer Bodenplatte zur strömungsdichten Versiegelung des Hohlraums eingebracht. Hierdurch ist gewährleistet, dass ein unerwünschter Bypass zwischen Roh-und Reinseite über das als Hohlkörper ausgebildete Positionierungselement verhindert wird. Alternativ zu einem Boden kommt auch eine konusförmige Verjüngung der Wandungen des Hohlkörpers in Betracht, die sich an der spitzen Seite des Hohlkörpers treffen und diesen in Achsrichtung strömungsdicht verschließen.

Gemäß noch einer weiteren zweckmäßigen Ausführung befindet sich der Boden im Hohlraum des Positionierungselements axial in Höhe des Dichtungsträgers. Der Dichtungsträger ist somit radial in das Positionierungselement hinein verlängert, um den Boden im Hohlraum des Positionierungselementes zu formen, der zugleich eine axiale Begrenzung für das Gegenpositionierungselement darstellt, das in den Hohlraum axial eingeführt wird.

Gemäß noch einer weiteren zweckmäßigen Ausführung ist das Positionierungselement als ein Längskörper ausgebildet, beispielsweise als Keil, dessen Längsachse in Radialrichtung verläuft und insbesondere an der radial innen liegenden Seite des Dichtungsträgers angeordnet ist. Der Längskörper erstreckt sich in den Filtermediumkörper hinein, der vorteilhafterweise als ein Faltenfilter ausgebildet ist, dessen Filterfalten sich näherungsweise in Radialrichtung erstrecken. Der Längskörper ragt in eine Filterfalte hinein, deren Faltenwände an der Außenseite des Längskörpers anliegen; die Filterfalte wird von dem Längskörper aufgefächert. Bei einer den Filtermediumkörper umschließenden Anordnung des Dichtungsträgers erstreckt sich das als Längskörper ausgebildete Positionierungselement von der radialen Außenseite des Filtermediumkörpers ausgehend radial nach innen.

Die Erstreckung des Längskörpers in Radialrichtung beträgt bei einer nicht-runden Querschnittsform des Filterelementes beispielhaft 5 % bis 15 % der Gesamtlänge, gemessen quer zur Längsachse des Filterelementes, und zum Beispiel 10 % bis 30 % der Gesamtbreite, ebenfalls quer zur Längsachse gemessen sowie orthogonal zur Gesamtlänge gesehen. Bei einer Ausführung des Filtermediumkörpers als Faltenfilter beträgt die radiale Erstreckung des Längskörpers vorteilhafterweise 30 % bis 90 % der radialen Länge der Filterfalten. Die Breite des Positionierungselementes, bezogen orthogonal zu dessen Längserstreckung, liegt beispielsweise bei 2 mm bis 15 mm.

Gemäß noch einer weiteren vorteilhaften Ausführung ist an einer Wandseite des Filtermediumkörpers, vorzugsweise an der Außenseite des Filtermediumkörpers ein Stützgitter angeordnet, wobei der Dichtungsträger von dem Stützgitter getragen ist. Gemäß einer zweckmäßigen Ausführung sind Dichtungsträger und Stützgitter einteilig ausgebildet. Bei einer Durchströmung des Filtermediumkörpers radial von innen nach außen liegen sowohl Stützgitter als auch ringförmig umlaufender Dichtungsträger an der radialen Außenseite des Filtermediumkörpers.

Gemäß einer weiteren vorteilhaften Ausführung ist der Dichtungsträger mit axialem Abstand zur nächstgelegenen Stirnseite des Rundfilterelementes angeordnet. Ebenso kann das Positionierungselement einen axialen Abstand zur nächsten Stirnseite aufweisen. Der axiale Abstand zwischen dem Dichtungsträger und der nächstgelegenen Stirnseite des Rundfilterelementes beträgt beispielsweise zwischen 10 % und 30 % der axialen Gesamthöhe des Rundfilterelementes. Dieser Abstand kann beispielsweise 30 mm bis 80 mm betragen.

Gemäß noch einer weiteren vorteilhaften Ausführung befindet sich an der nächstgelegenen Stirnseite eine Endscheibe zur strömungsdichten Abdichtung des Filtermediumkörpers. In die Endscheibe ist bevorzugt eine Ausnehmung eingebracht, die mit dem Positionierungselement axial fluchtet, welches einen axialen Abstand zur Endscheibe aufweist. Durch die Ausnehmung ragt im montierten Zustand das gehäuseseitige Gegenpositionierungselement hindurch. Auf diese Weise ist das Positionierungselement bevorzugt als insbesondere radial in den Filtermediumkörper hineinragende Ausbuchtung ausgeführt. Die Ausbuchtung und/oder das Positionierungselement ist bevorzugt nach radial außen und axial im Bereich der nächstliegenden bzw. dem Dichtungselement nächstliegenden Endscheibe offen. Die Ausbuchtung und/oder das Positionierungselement weist ferner in einem axial von der Endscheibe beabstandeten Bereich, insbesondere wie zuvor ausgeführt bevorzugt im Wesentlichen auf Höhe des Dichtungselementes, einen geschlossenen Boden auf. Die Ausbuchtung und/oder das Positionierungselement weist ferner zwei sich an den in den Filtermediumkörper hineinragenden Enden miteinander dichtend verbundene Seitenwände auf, die wiederum dichtend mit der Endscheibe verbunden sein können. Das Positionierungselement ist somit bevorzugt derart geschlossen und mit der Endscheibe und dem Dichtungselement fluiddicht verbunden ausgeführt, dass die Rohseite von der Reinseite getrennt ist. In anderen Worten ist es bevorzugt, dass die als den Filtermediumkörper über einen Teil dessen Länge umgebenden Rohrabschnitt ausgebildete Trägerwand zur Ausbildung des Positionierungselements eine insbesondere radiale, insbesondere keilförmige Einbuchtung aufweist, wobei die Einbuchtung im Bereich des dichtungsseitigen Endes der Trägerwand fluiddicht geschlossen und auf der gegenüberliegenden Seite offen ausgeführt ist.

Gemäß noch einer weiteren zweckmäßigen Ausführung sind über den Umfang verteilt mindestens zwei Positionierungselemente an dem Dichtungsträger angeordnet. Die Positionierungselemente befinden sich beispielsweise an diametral gegenüberliegenden Seiten an dem Rundfilterelement, zum Beispiel im Fall einer nicht-runden Querschnittsform des Rundfilterelementes an den gegenüberliegenden Schmalseiten bzw. an den abgerundeten Seiten.

Die Erfindung bezieht sich des Weiteren auf eine Filtereinrichtung mit einem vorbeschriebenen Rundfilterelement und mit einem Filtergehäuse zur Aufnahme des Rundfilterelementes. Das Filtergehäuse umfasst zweckmäßigerweise auch einen Gehäusedeckel, an dessen Innenseite das Gegenpositionierungselement angeordnet sein kann. Das Gegenpositionierungselement ist beispielsweise als ein Schwert ausgebildet, das im montierten Zustand in den Hohlraum im Positionierungselement hineinragt, welches als Längskörper ausgebildet ist.

Der Dichtungsträger befindet sich an oder benachbart zu einer Stirnseite des Filterelementes, wobei der Außenrand des Dichtungsträgers vorteilhafterweise radial über die Außenseite des Filtermediumkörpers und vorteilhafterweise auch über die Außenseite eines eventuell vorhandenen Stützgitters hinausragt, so dass im eingebauten Zustand der Außenrand zur seitlichen Abstützung des Filterelementes in dem Filtergehäuse dient. An oder benachbart zur gegenüberliegenden Stirnseite kann das Filterelement einen oder mehrere seitlich radial hinausragende Nocken zur Abstützung an dieser Stirnseite des Filterelementes im Filtergehäuse aufweisen. Das Filterelement kann in Achsrichtung eine sich verjüngende Querschnittsform aufweisen, wobei das Filterelement benachbart zum Dichtungsträger die größere Querschnittsform besitzt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in Explosionsdarstellung eine Filtereinrichtung zur Gasfiltration, mit einem Filtergrundgehäuse, einem Filterelement und einem Gehäusedeckel;
- Fig. 2: in perspektivischer Ansicht das Filterelement;
- Fig. 3: das Filterelement, jedoch ohne stirnseitige Endscheibe, mit einem keilförmigen Positionierungselement, das radial in den als Faltenfilter ausgebildeten Filtermediumkörper hineinragt;
- Fig. 4: ein umlaufender Dichtungsträger des Filterelementes mit dem radial gerichteten Positionierungselement und einem Stützgitter;
- Fig. 5: in perspektivischer Darstellung ein Gehäusedeckel des Filtergehäuses, mit einem Gegenpositionierungselement an der Innenseite; und
- Fig. 6: einen Schnitt durch die Filtereinrichtung im montierten Zustand.

In den Figuren sind gleiche Bauteile mit gleichen Bezugszeichen versehen.

### Ausführungsform(en) der Erfindung

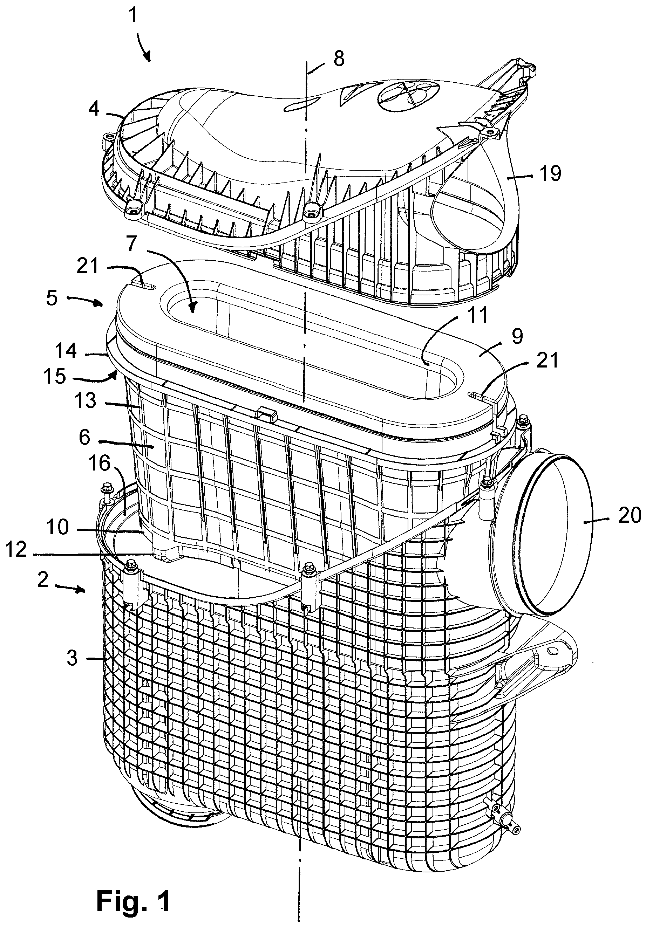

In Fig. 1 ist eine Filtereinrichtung 1 dargestellt, die vorzugsweise zur Gasfiltration, insbesondere zur Luftfiltration im Ansaugtrakt einer Brennkraftmaschine eingesetzt wird. Die Filtereinrichtung 1 umfasst ein Filtergehäuse 2, das sich aus einem Filtergrundgehäuse 3 und einem Gehäusedeckel 4 zusammensetzt, und ein Filterelement 5, das in das Filtergrundgehäuse 3 einsetzbar ist. Der Gehäusedeckel 4 verschließt den Aufnahmeraum im Filtergrundgehäuse zur Aufnahme des Filterelementes 5.

Das Filterelement 5 weist einen Filtermediumkörper 6 auf, an dem die Filtration des zu reinigenden Fluids stattfindet. Das Filterelement 5 ist als Rundfilterelement ausgebildet, entsprechend ist auch der Filtermediumkörper 6 als Rundelement ausgebildet, das einen innen liegenden Strömungsraum 7 einschließt, in den das zu reinigende Fluid eingeleitet wird. Das Fluid wird axial, bezogen auf die Längsachse 8 des Filterelementes 5 und der Filtereinrichtung 1, in den Strömungsraum 7 eingeführt. Anschließend durchströmt das Fluid die Wandung des Filtermediumkörpers 6 radial von innen nach außen. Dementsprechend bildet die Innenwand des Filtermediumkörpers 6 die Rohseite und die Außenwand die Reinseite.

Das Filterelement 5 und der Filtermediumkörper 6 besitzen eine stark ovalisierte Form mit zwei parallel verlaufenden Längsseiten und halbkreisförmigen Schmalseiten. Außerdem besitzt das Filterelement 5 eine konusförmige Grundform, bei der die axial gegenüberliegenden Stirnseiten des Filterelementes 5 unterschiedlich groß ausgebildet sind und einen unterschiedlich großen Außenumfang aufweisen. Die axialen Stirnseiten des Filtermediumkörpers 6 sind von jeweils einer Endscheibe 9, 10 strömungsdicht abgedeckt, wobei die Endscheibe 9 an der größeren Stirnseite des Filterelementes 5 offen ausgebildet ist und eine Strömungsöffnung 11 aufweist, über die das Rohfluid in den innen liegenden Strömungsraum 7 einströmen kann. Die gegenüberliegende Endscheibe 10 ist dagegen geschlossen ausgebildet, so dass auch der innen liegende Strömungsraum 7 an dieser Seite axial verschlossen ist.

An der geschlossen ausgebildeten Endscheibe 10 sind Nocken 12 angeformt, die sich radial nach außen erstrecken und an den Längsseiten benachbart zu den Schmalseiten positioniert sind. Die Nocken 12, die einteilig mit der Endscheibe 10 ausgebildet sind, stützen das Filterelement 5 im montierten Zustand am Filtergrundgehäuse 3 ab. In Radialrichtung ragen die Nocken 12 nicht weiter vor als die gegenüberliegende, größere Endscheibe 9.

An der Außenwand des Filtermediumkörpers 6 befindet sich ein Stützgitter 13, das insbesondere aus Kunststoff gefertigt und separat von den Endscheiben 9 und 10 ausgebildet ist. Das Stützgitter 13 stützt den Filtermediumkörper an dessen Außenwand in Radialrichtung ab. Aufgrund der radialen Durchströmung des Filtermediumkörpers 6 von innen nach außen entsteht ein nach außen gerichteter Druck im Filtermediumkörper, der von dem Stützgitter 13 aufgenommen wird. Dies stellt sicher, dass sich der Filtermediumkörper 6 durch den Druck des ihn durchströmenden Fluids nicht verformt.

Benachbart zu der Endscheibe 9, in die die Strömungsöffnung 11 für das Einführen des Rohfluids eingebracht ist, befindet sich ein Dichtungsträger 14, der Träger eines Dichtungselementes 15 ist. Der Dichtungsträger ist als eine ringförmig umlaufende Trägerwand ausgebildet, die vorzugsweise einteilig mit dem Stützgitter 13 ausgeführt ist. Das Dichtungselement 15 ist als ein Dichtring ausgebildet, der bevorzugt in eine Aufnahmenut in der Stirnseite der Trägerwand 14 auf der der benachbarten Endscheibe 9 abgewandten Seite eingesetzt ist. Das Dichtungselement 15 ist der Endscheibe 9 abgewandt und der gegenüberliegenden Endscheibe 10 zugewandt und liegt im montierten Zustand an einem umlaufenden Absatz 16 an der Innenwand des aufnehmenden Filtergrundgehäuses 3 auf.

In den Gehäusedeckel 4 ist eine seitliche Strömungsöffnung 19 eingebracht, über die das Rohfluid radial in die Filtereinrichtung hineinströmen kann. Die Strömungsöffnung 19 im Gehäusedeckel 4 korrespondiert mit einer weiteren Strömungsöffnung 20, die in das Filtergrundgehäuse 3 eingebracht ist. Bei aufgesetztem Gehäusedeckel 4 liegen die Strömungsöffnungen 19 und 20 übereinander, so dass ein durchgehender Strömungsweg für das Rohfluid gebildet ist.

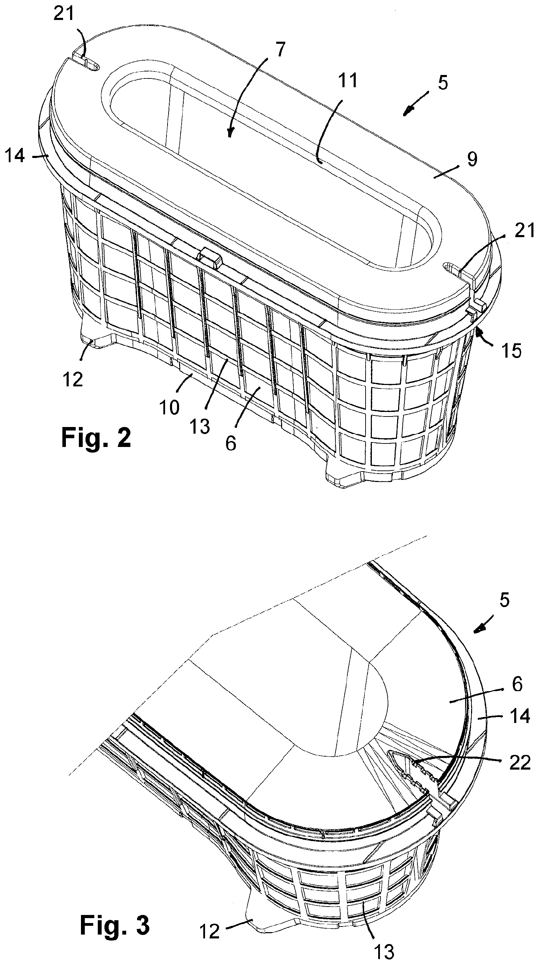

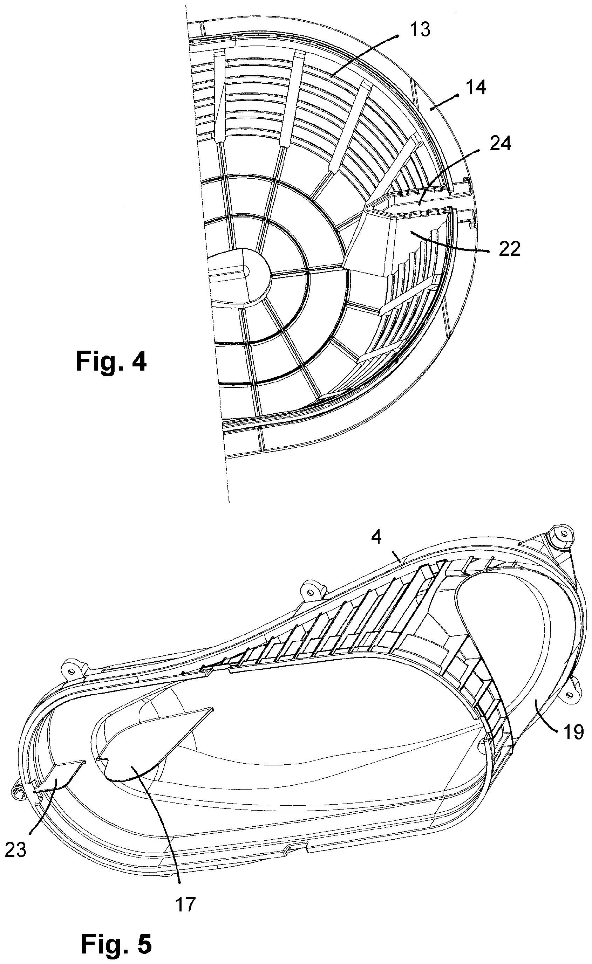

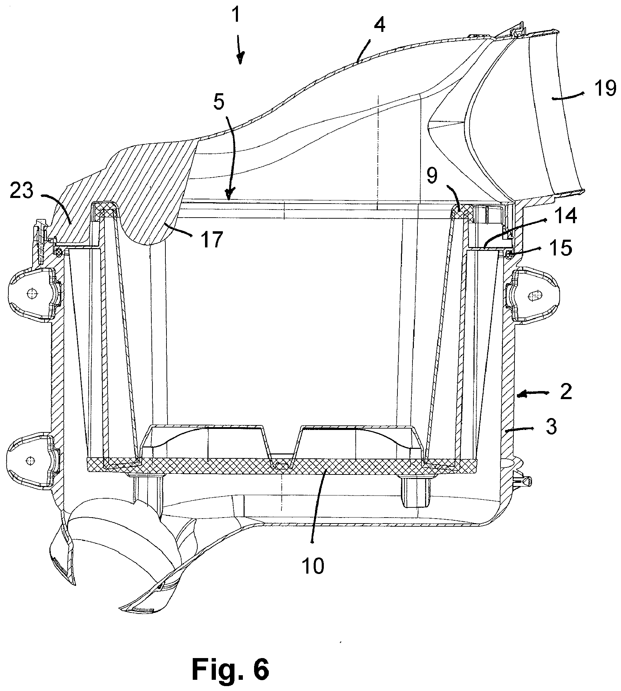

Wie Fig. 1 in Verbindung mit Fig. 2 zu entnehmen, ist in die oben liegende Endscheibe 9, die benachbart zu dem ringförmig umlaufenden Dichtungsträger 14 angeordnet ist, im Bereich der beiden gegenüberliegenden, halbkreisförmigen Schmalseiten jeweils eine Ausnehmung 21 eingebracht. Diese Ausnehmung 21 erlaubt es, ein Gegenpositionierungselement 23 (Fig. 5, 6), das sich an der Innenseite des Gehäusedeckels 4 befindet, in ein zugeordnetes Positionierungselement 22 (Fig. 3, 4) axial einzuschieben, wobei das Positionierungselement 22 Bestandteil des Filterelementes 5 ist. Das Positionierungselement 22 ist als ein keilförmiger Längskörper ausgebildet, der sich von dem umlaufenden Dichtungsträger 14 radial nach innen erstreckt. Der Dichtungsträger 14 liegt an der radialen Außenseite des Filtermediumkörpers 6 an, das keilförmige Positionierungselement 22 ragt, wie Fig. 3 zu entnehmen ist, in den Filtermediumkörper 6 radial hinein, der als Faltenfilter mit einer Vielzahl von Filterfalten ausgebildet ist.

Das keilförmige Positionierungselement 22 ist als ein Hohlkörper ausgebildet, wohingegen das Gegenpositionierungselement 23 an der Innenseite des Gehäusedeckels 4 als ein Schwert ausgeführt ist. Im montierten Zustand ragt das Schwert 23 in den Hohlkörper 22 hinein, wodurch eine Zentrierung des Filterelementes 5 in dem Filtergehäuse 2 erreicht wird. Aufgrund der symmetrischen Ausbildung des Filterelementes 5 mit Ausnehmungen 21 sowie jeweils einem Positionierungselement 22 im Bereich diametral gegenüberliegender, halbkreisförmiger Schmalseiten kann das Filterelement 5 in zwei verschiedenen, um 180° versetzten Positionen in das Filtergehäuse 2 eingesetzt werden. An der Innenseite des Gehäusedeckels 4 befindet sich im Ausführungsbeispiel lediglich ein schwertförmiges Gegenpositionierungselement 23. Grundsätzlich möglich ist es aber auch, zwei derartige Gegenpositionierungselemente 23 an der Innenseite des Gehäusedeckels 4 anzuordnen, die jeweils über eine Ausnehmung 21 in ein zugeordnetes Positionierungselement 22 im Filterelement 5 hineinragen.

Das umlaufende Dichtungselement 15 liegt an dem innen liegenden Absatz 16 im Filtergrundgehäuse 3 auf und sorgt für eine strömungsdichte Separierung der Roh- von der Reinseite. Um einen unerwünschten Bypass zwischen Roh- und Reinseite über das als Hohlkörper ausgeführte Positionierungselement 22 zu verhindern, weist das Positionierungselement 22 einen Boden 24 in Form einer Bodenplatte auf (Fig. 4), der einteilig mit dem Dichtungsträger 14 ausgebildet ist und sich in Höhe der Ebene des Dichtungsträgers 14 radial nach innen im innen liegenden Hohlraum des Gegenpositionierungselementes 22 erstreckt. Der Boden 24 verschließt den innen liegenden Hohlraum im Positionierungselement 22, so dass über das Positionierungselement 22 keine unerwünschte Strömung des Fluids zwischen Roh- und Reinseite entstehen kann.

Wie Fig. 4 des Weiteren zu entnehmen, erstreckt sich das Positionierungselement 22 an der Innenseite des Stützgitters 13 axial über die gesamte Höhe des Stützgitters. Es kann jedoch zweckmäßig sein, das Positionierungselement 22 axial kürzer auszubilden, wobei grundsätzlich eine axiale Höhe zwischen dem Boden 24 und der oben liegenden Stirnseite des Positionierungselementes 22 ausreichend ist.

Der Dichtungsträger 14 ist axial zur oben liegenden Stirnfläche der Endscheibe 9 beabstandet. Auch zwischen der oben liegenden Kante des Positionierungselementes 22 und der oben liegenden Stirnseite der Endscheibe 9 besteht ein axialer Abstand, so dass die Endscheibe 9, wie Fig. 1 und 2 zu entnehmen, das Positionierungselement 22 vollständig abdeckt. Lediglich über die Ausnehmungen 21, die in die Endscheibe 9 eingebracht sind, besteht ein Zugang zu dem Positionierungselement 22, über den beim Aufsetzen des Deckels 4 das schwertförmige Gegenpositionierungselement 23 in das Positionierungselement 22 einsetzbar ist.

An der Innenseite des Gehäusedeckels 4 befindet sich zusätzlich zu dem schwertförmigen Positionierungselement 22 auch ein Strömungsleitelement 17, das in einer Flucht mit dem Gegenpositionierungselement 23 liegt. Sowohl das Gegenpositionierungselement 23 als auch das Strömungsleitelement 17 sind geradlinig und in einer Ebene liegend ausgebildet. Das Strömungsleitelement 17 hat eine strömungsleitende Funktion für die herangeführte Rohluft. Zwischen dem Gegenpositionierungselement 23 und dem Strömungsleitelement 17 klafft an der Innenseite des Gehäusedeckels 4 eine Lücke, mit der der Gehäusedeckel 4 im aufgesetzten Zustand einen Abschnitt der oberen Endscheibe 9 übergreift (Fig. 6).

## Patentansprüche

1. Rundfilterelement, insbesondere zur Gasfiltration, beispielsweise für einen Luftfilter, mit einem Filtermediumkörper (6), dessen Wandung von dem zu reinigenden Fluid bezogen auf die Längsachse (8) des Filtermediumkörpers (6) in Radialrichtung durchströmbar ist, mit mindestens einer Endscheibe (9, 10) an einer Stirnseite des Filtermediumkörpers (6), **dadurch gekennzeichnet, dass** an oder benachbart zu einer Stirnseite des Filtermediumkörpers (6) ein umlaufender Dichtungsträger (14) angeordnet ist, an dem sich ein Dichtungselement (15) benachbart zur Außenseite des Filtermediumkörpers (6) abstützt, und dass am Rundfilterelement (5) ein sich in den Filtermediumkörper (6) hinein erstreckendes Positionierungselement (22) zur formschlüssigen Verbindung des Rundfilterelements (5) im eingebauten Zustand im Filtergehäuse (2) mit einem zugeordneten, gehäuseseitigen Gegenpositionierungselement (23) angeordnet ist, wobei der Dichtungsträger (14) die Rohseite von der Reinseite strömungsdicht separiert.

2. Rundfilterelement nach Anspruch 1, **dadurch gekennzeichnet, dass** der Dichtungsträger (14) Träger des Positionierungselements (22) ist.

3. Rundfilterelement nach Anspruch 1 oder 2, **dadurch gekennzeichnet, dass** das Positionierungselement (22) sich radial in den Filtermediumkörper (6) hineinerstreckt.

4. Rundfilterelement nach einem der Ansprüche 1 bis 3, **dadurch gekennzeichnet, dass** das Positionierungselement (22) als ein Hohlkörper ausgebildet ist.

5. Rundfilterelement nach Anspruch 4, **dadurch gekennzeichnet, dass** in den Hohlraum im Positionierungselement (22) ein Boden (24) zur strömungsdichten Versiegelung des Hohlraums eingebracht ist.

6. Rundfilterelement nach Anspruch 5, **dadurch gekennzeichnet, dass** der Boden (24) im Hohlraum des Positionierungselements (22) axial in Höhe des Dichtungsträgers (14) liegt.

7. Rundfilterelement nach einem der Ansprüche 1 bis 6, **dadurch gekennzeichnet, dass** das Positionierungselement (22) als Längskörper, beispielsweise als Keil ausgebildet ist, dessen Längsachse in Radialrichtung verläuft.

8. Rundfilterelement nach Anspruch 7, **dadurch gekennzeichnet, dass** das Positionierungselement (22) von der radialen Außenseite des Filtermediumkörpers (6) ausgehend sich radial nach innen erstreckt.

9. Rundfilterelement nach einem der Ansprüche 1 bis 8, **dadurch gekennzeichnet, dass** an einer Wandseite des Filtermediumkörpers (6) ein Stützgitter (13) angeordnet ist und der Dichtungsträger (14) vom Stützgitter (13) getragen ist, insbesondere einteilig mit dem Stützgitter (13) ausgebildet ist.

10. Rundfilterelement nach einem der Ansprüche 1 bis 9, **dadurch gekennzeichnet, dass** der Filtermediumkörper (6) als Faltenfilter ausgebildet ist.

11. Rundfilterelement nach einem der Ansprüche 1 bis 10, **dadurch gekennzeichnet, dass** in die Endscheibe (9) benachbart zum Positionierungselement (22) eine Ausnehmung (21) zur Aufnahme des Gegenpositionierungselements (23) eingebracht ist.

12. Rundfilterelement nach einem der Ansprüche 1 bis 11, **dadurch gekennzeichnet, dass** der Dichtungsträger (14) mit axialem Abstand zur nächstgelegenen Stirnseite des Rundfilterelements angeordnet ist.

13. Rundfilterelement nach einem der Ansprüche 1 bis 12, **dadurch gekennzeichnet, dass** über den Umfang verteilt mindestens zwei Positionierungselemente (22) an dem Dichtungsträger (14) angeordnet sind.

14. Filtereinrichtung mit einem Rundfilterelement nach einem der Ansprüche 1 bis 13 und mit einem Filtergehäuse (2) zur Aufnahme des Rundfilterelements.

15. Filtereinrichtung nach Anspruch 14, **dadurch gekennzeichnet, dass** das Filtergehäuse (2) einen Gehäusedeckel (4) umfasst, der an der Innenseite das Gegenpositionierungselement (23) aufweist.

16. Filtereinrichtung nach Anspruch 14 oder 15, **dadurch gekennzeichnet, dass** das Gegenpositionierungselement (23) als Schwert ausgebildet ist.
